# FASCICULE DE BREVET EUROPEEN

(11) **EP 3 013 649 B1**
(45) Date de publication et mention de la délivrance du brevet: **02.08.2017**
(21) Numéro de dépôt: 14747692.3
(22) Date de dépôt: 27.06.2014
(51) Int. Cl.: B60R 16/027, H01R 35/02

(54) **CONTACTEUR TOURNANT POUR UNE COLONNE DE DIRECTION DE VEHICULE AUTOMOBILE**
DREHVERBINDER FÜR EINE KRAFTFAHRZEUGLENKSÄULE
ROTATING CONNECTOR FOR A MOTOR VEHICLE STEERING COLUMN

(30) Priorité: 27.06.2013 FR 1301515
(43) Date de publication de la demande: 04.05.2016
(73) Titulaire: SC2N, 94046 Creteil Cedex (FR)
(72) Inventeur: LEGOUBIN, Joël, F-94046 Créteil Cedex (FR); NOEL, Patrick, F-94046 Créteil Cedex (FR)
(74) Mandataire: Pothmann, Karsten
(86) Numéro de dépôt international: PCT/FR2014/000149
(87) Numéro de publication internationale: WO 2014/207327

(56) Documents cités:
- EP-A1- 2 182 594
- EP-A2- 0 860 330
- EP-B1- 2 376 312
- JP-A- H 058 734
- US-A- 5 314 344
- US-A1- 2008 014 775

## Description

La présente invention concerne les contacteurs tournants pour véhicules automobiles.

La multiplication des organes du véhicule assurant de plus en plus de fonctions passe en partie par la disposition de commutateurs sous le volant. Ces commutateurs sous volant présentent un avantage en termes d'ergonomie et de sécurité, puisqu'ils sont disposés près des mains de l'utilisateur lorsque celui-ci conduit, et peuvent être actionnés sans que le conducteur ne quitte la route des yeux.

Pour réaliser les commutateurs sous volant, il est connu d'utiliser des contacteurs tournants.

Les contacteurs tournants permettent de relier électriquement un ou plusieurs dispositifs liés au volant du véhicule à un circuit électrique principal du véhicule, par l'intermédiaire de moyens de transmission électriques. Les dispositifs peuvent consister par exemple en des contacteurs électriques, tels que l'avertisseur sonore, ou en un dispositif de sécurité à coussin gonflable qui se gonfle en cas d'accident pour protéger le conducteur du véhicule.

Les contacteurs tournants peuvent à cet effet comporter par exemple au moins une bande de liaison électrique, pour transmettre le courant entre le circuit électrique principal du véhicule, et les dispositifs liés au volant.

Selon une solution connue, une bande de liaison électrique est réalisée sous la forme d'un ruban souple sur lequel sont disposés des pistes électriques, réalisées par exemple au moyen de fils de cuivre enrobés dans un plastique souple.

Le ou les rubans souples sont au moins partiellement enroulés dans une cassette. Les rubans pour la transmission électrique sont réalisés dans un matériau souple, de façon à pouvoir aisément les enrouler ou les dérouler à l'intérieur de la cassette.

Une telle cassette peut comporter deux parties montées mobiles l'une par rapport à l'autre. Usuellement l'une des parties dite partie fixe, est destinée à être montée sur la colonne de direction du véhicule, tandis que l'autre partie, dite partie mobile, est destinée à être liée en rotation au volant du véhicule automobile.

Il peut s'agir notamment d'un couvercle et d'un fond de boîtier, le fond de boîtier étant solidaire de la colonne de direction et le couvercle étant lié en rotation au volant. La rotation du couvercle permet d'enrouler ou de dérouler les rubans souples logés dans la cassette, éventuellement à l'aide de moyens d'enroulement.

Les parties fixe et mobile de la cassette sont montées mobiles en rotation l'une par rapport à l'autre à l'encontre du ou des rubans souples de liaison électrique.

Les extrémités du ou des rubans souples sont alors reliées à des connecteurs montés respectivement sur la partie fixe et la partie mobile du contacteur tournant.

Un tel contacteur tournant peut comporter en outre une pluralité de chenilles pour plaquer le(s) ruban(s) souple(s) d'une part contre une face interne de la partie fixe de la cassette et d'autre part contre une face externe d'un élément de la partie mobile de la cassette, et servir de guide pour l'enroulement et le déroulement du ou des rubans souples.

Dans un souci de compacité, le contacteur tournant peut être intégré dans un support de commutateurs placé sous le volant.

Généralement, le contacteur tournant est livré au constructeur automobile pour être monté sur la colonne de direction via ce support de commutateurs.

Pour ce faire le contacteur tournant doit être livré dans sa position neutre ou centrale afin de pouvoir effectuer, sans détérioration du contacteur, le nombre de tours de volant requis. Usuellement à cet effet, on maintient les parties dans cette position prédéterminée par exemple à l'aide d'un organe de blocage temporaire.

Pour cela, il est nécessaire d'identifier la position du contacteur tournant, pour le placer dans sa position neutre avant de le bloquer temporairement en rotation jusqu'au montage sur la colonne de direction.

À cet effet, il est connu d'utiliser un pignon compte tours dont la position est incrémentée par un doigt d'entraînement sur la partie mobile du contacteur tournant. Cependant cette solution pose un problème d'encombrement, car le pignon compte tours et le doigt d'entraînement associé requièrent de la place.

Par ailleurs, il est connu d'agencer sur la partie mobile du contacteur tournant une came de retour de clignotants permettant une prise de force radiale, destinée à coopérer avec un doigt de retour de clignotant associé agencé sur le support de commutateurs pour ramener en position éteinte les clignotants lors du mouvement de retour du volant suite à un virage dans le sens du clignotement.

Du fait de la problématique de l'encombrement, il devient difficile de loger à la fois une came de retour de clignotants et un doigt d'entraînement du pignon dans un espace réduit sur la partie mobile du contacteur tournant.

Il est donc nécessaire de permettre une identification de la position du contacteur tournant permettant de pallier ce problème d'encombrement.

Selon une autre solution connue pour identifier la position du contacteur tournant, une des chenilles est singularisée par rapport aux autres chenilles, voir EP2376312B. Un couvercle transparent est alors disposé au-dessus de la partie mobile de la cassette de manière à voir la chenille singularisée et porte des repères relatifs au nombre de tours effectués par la partie mobile et au sens de rotation. La chenille singularisée et le couvercle transparent sont agencés de telle sorte que lorsque la partie mobile tourne, la chenille singularisée se place sensiblement au niveau d'un repère correspondant au nombre de tours effectués par la partie mobile et au sens de rotation.

On obtient donc un repérage aisé de la position du contacteur tournant permettant de revenir de façon simple à la position neutre du contacteur.

Cependant, le contacteur tournant peut comporter un élément au moins partiellement opaque, tel qu'un circuit de pistes de connexion, agencé entre le couvercle du contacteur tournant et les rubans souples et les chenilles logés dans la cassette. Cet élément opaque empêche alors la visualisation de la chenille singularisée à travers un couvercle transparent pour identifier rapidement la position du contacteur tournant.

À titre d'exemple, pour des fonctions utilisant un courant de puissance dit fort courant (plusieurs ampères), notamment l'avertisseur sonore, le passage du courant fort peut nécessiter un contact supplémentaire, en parallèle du contact tournant obtenu grâce au(x) ruban(s) souple(s). Dans ce cas, la cassette comporte une paroi fixe agencée du côté opposé au fond de boîtier fixe de la cassette et le couvercle tournant est disposé sur la paroi fixe, et au moins une paire de pistes de connexion courant fort, de forme circulaire associée à au moins une paire de contacts frottants, respectivement portées par une surface de la paroi fixe, et la surface du couvercle tournant en vis-à-vis ou vice-versa.

La paroi fixe portant les pistes électriques agencée entre le fond de boîtier recevant le ou les rubans souples et les chenilles et le couvercle tournant est donc au moins partiellement opaque et empêche une lecture rapide de la position du contacteur tournant à travers un couvercle transparent qui serait disposé au-dessus de la partie mobile.

L'invention a donc pour objectif de fournir un contacteur tournant optimisé permettant une identification rapide de la position neutre du contacteur tournant.

Afin de pallier au moins partiellement les inconvénients précédemment cités, l'invention a pour objet un contacteur tournant pour colonne de direction de véhicule automobile, comprenant :
- au moins un ruban souple de liaison électrique pour l'alimentation de dispositifs liés au volant dudit véhicule,
- des moyens d'enroulement / de déroulement du ruban souple comportant une pluralité de chenilles pour guider l'enroulement et le déroulement du ruban souple, et
- une cassette apte à être montée sur la colonne de direction et comportant :
   - une partie fixe, et
   - une partie mobile par rapport à la partie fixe apte à être liée en rotation au volant du véhicule, et définissant avec la partie fixe un logement pour le ruban souple et les chenilles,
   caractérisé en ce que :
   - la partie fixe de la cassette présente une fenêtre de visualisation, et en ce que
   - une des chenilles est singularisée et présente au moins une portion destinée à être agencée sensiblement en regard de la fenêtre de visualisation de la cassette lorsque le contacteur tournant est en position neutre, la position neutre étant une position à partir de laquelle le contacteur tournant peut être tourné dans un sens et dans l'autre selon un nombre de tours prédéfini.

L'identification rapide de la position neutre du contacteur tournant se fait donc grâce à la chenille singularisée lorsqu'au moins une portion de cette chenille singularisée est visible à travers la fenêtre de visualisation de la cassette.

Selon un aspect de l'invention, la partie fixe comporte un fond de boîtier apte à recevoir le ruban souple et les chenilles, et la fenêtre de visualisation est agencée sur une portion du fond de boîtier exempte de ruban souple. La présence du ruban souple reçu dans le fond de boîtier ne gêne pas la visibilité de la chenille singularisée, car la fenêtre de visualisation est placée sur une portion du fond de boîtier où il n'y a pas de ruban interposé entre la chenille et la paroi du fond de boîtier.

Selon un mode de réalisation particulier, le fond de boîtier présente une paroi de fond et une paroi latérale raccordée à la paroi de fond, et la fenêtre de visualisation est agencée sur la paroi latérale du fond de boîtier. En particulier, la fenêtre de visualisation est agencée « sous » le ruban souple, c'est-à-dire au niveau de la paroi latérale à proximité de la paroi de fond du fond de boîtier.

Selon un autre aspect de l'invention, la chenille singularisée est de couleur différente par rapport aux autres chenilles et aux éléments de la cassette. La différenciation de couleur de la chenille singularisée par rapport aux autres chenilles et au reste de l'environnement, à savoir la cassette et les éléments logés dans la cassette, permet d'interpréter rapidement si le contacteur est dans la position neutre ou non.

Selon encore un autre aspect de l'invention, les chenilles présentent respectivement des sections d'engagement avec une première denture ménagée à l'intérieur de la partie fixe et avec une seconde denture ménagée à l'extérieur de la partie mobile pour maintenir le ruban souple d'une part contre une face interne de la partie fixe et d'autre part contre une face externe de la partie mobile.

En particulier, la fenêtre de visualisation peut être agencée entre deux dents de la partie fixe. C'est dans ce cas une section d'engagement de la chenille singularisée qui vient se placer en regard de la fenêtre de visualisation lorsque le contacteur tournant est en position neutre.

Selon un mode de réalisation particulier, la partie fixe comprend une paroi au moins partiellement opaque disposée entre les chenilles et la partie mobile. La présence de cette paroi au moins partiellement opaque entre les chenilles et la partie mobile ne gêne pas la vérification de la position du contacteur tournant à travers la fenêtre de visualisation.

Selon un autre aspect de l'invention, la partie mobile de la cassette comporte un couvercle tournant disposé sur la paroi du côté opposé au fond de boîtier.

Le couvercle tournant peut comporter une came de retour de clignotant agencée sur la surface latérale du couvercle tournant.

Ainsi, le contacteur tournant selon l'invention peut comporter dans un agencement compact avec un encombrement réduit, aussi bien la chenille singularisée et la fenêtre de visualisation au niveau de la partie fixe permettant de distinguer de façon simple et rapide la position neutre du contacteur tournant, qu'une came de retour de clignotant agencée radialement sur la partie mobile apte à coopérer avec un doigt de retour de clignotant pour ramener le clignotant en position éteinte après le virage.

Selon un autre aspect de l'invention, le contacteur tournant comprend au moins une paire de pistes de connexion courant fort et au moins une paire de contacts frottants associés à la paire de pistes de connexion courant fort et destinés à coopérer avec lesdites pistes de connexion. La paire de pistes de connexion courant fort et la paire de contacts frottants sont portés d'une part par la paroi au moins partiellement opaque et d'autre part par la partie mobile en vis-à-vis de la paroi au moins partiellement opaque.

Le contacteur tournant selon l'invention permet en outre de porter des pistes courant fort dissociées de lignes de courant faible du ruban souple. Ceci permet d'éviter que des courants soient induits dans les lignes courant faible par les lignes courant fort, ce qui pourrait déclencher par exemple de manière intempestive une fonction liée au volant telle que le coussin gonflable de sécurité nuisant ainsi à la sécurité du conducteur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en éclaté d'un contacteur tournant selon l'invention,
- la figure 2 représente un support de commutateurs portant le contacteur tournant de la figure 1,
- la figure 3 est une vue partielle du support de commutateurs de la figure 2,
- la figure 4 est une vue en perspective de côté du contacteur tournant de la figure 1 à l'état assemblé,
- la figure 5 est une première vue en perspective d'un fond de boîtier d'une cassette du contacteur tournant logeant des rubans souples et des chenilles associées,
- la figure 6 est une deuxième vue en perspective du fond de boîtier de la figure 5,
- la figure 7 est une vue partielle du fond de boîtier de la cassette des figures 5 et 6, et
- la figure 8 est une vue de dessus du fond de boîtier de la figure 5 montrant de façon schématique un axe d'emplacement d'une chenille singularisée.
Sur toutes les figures les éléments identiques portent les mêmes références.

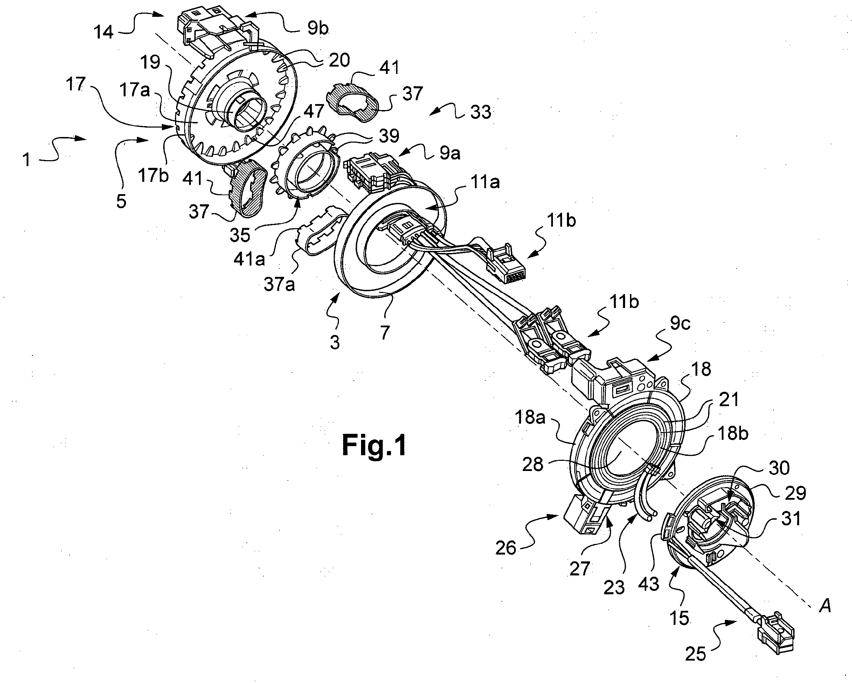

Sur la figure 1, on a représenté une vue éclatée d'un contacteur tournant 1 tournant pour une colonne de direction d'un véhicule automobile (non représentée sur les figures).

Dans la suite de la description, les termes « radial », « axial », « axialement » sont utilisés en référence à l'axe *A* de la colonne de direction (non représentée).

Le contacteur tournant 1 comporte des moyens de transmission électriques 3 reçus dans une cassette 5 destinée à être montée autour de la colonne de direction.

Le contacteur tournant assure par l'intermédiaire des moyens de transmission électriques 3 des liaisons électriques pour, par exemple, commander à partir du volant des dispositifs liés au volant tel qu'un coussin gonflable de protection du conducteur.

Les moyens de transmission électrique 3 comportent selon le mode de réalisation décrit au moins un ruban souple 7 de liaison électrique.

Un ruban souple 7 comporte généralement une pluralité de lignes de conducteurs électriques métalliques, par exemple en cuivre. Il peut s'agir à titre d'exemple de lignes de courant faible, c'est-à-dire de l'ordre de quelques µA à quelques ampères, par exemple une alimentation pour l'éclairage de l'ordre de 2A. Les lignes de conducteurs sont enrobées d'un isolant électrique tel que du plastique souple.

Le ruban souple 7 peut être enroulé en spirale.

Les extrémités du ruban souple 7 pénètrent dans des connecteurs 9a et 11a aptes à coopérer avec des connecteurs complémentaires 9b et 11b destinés à être reliés au faisceau électrique du véhicule ou aux dispositifs liés au volant du véhicule.

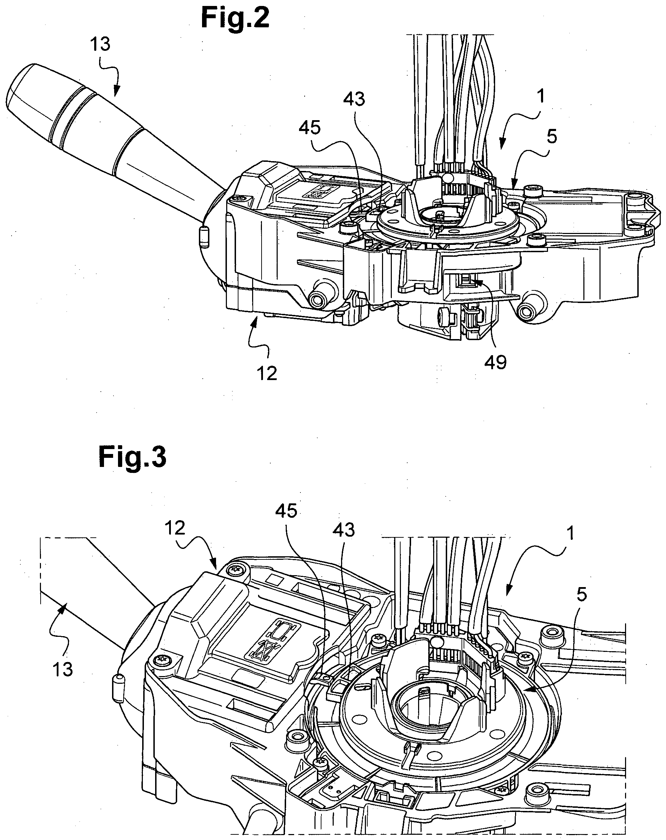

La cassette 5 est quant à elle destinée à être montée sur la colonne de direction (non visible sur les figures) via un support de commutateurs 12 représenté sur les figures 2 et 3, destiné à être placé sous le volant. Ce support de commutateurs 12 peut être solidarisé à la colonne de direction, par exemple par des vis, ou autres organes de fixation.

Le support de commutateurs 12 comporte en plus du contacteur tournant 1 des commutateurs 13, appelés commutateurs sous-volant, comme ceux qui commandent usuellement des fonctions telles que les clignotants, phares et essuie-glace du véhicule, mais aussi des satellites radio ou un régulateur de vitesse.

La cassette 5 est insérée dans un logement de forme correspondante du corps du support de commutateurs 12, pratiqué par exemple en position centrale, et autour duquel sont disposés les commutateurs 13.

En outre, en se référant de nouveau à la figure 1, la cassette 5 comporte deux parties 14, 15 montées mobiles l'une par rapport à l'autre avec intervention des moyens de transmissions électriques 3 entre les deux parties 14, 15.

Plus précisément, la cassette 5 comporte une première partie fixe 14, destinée à être montée sur la colonne de direction du véhicule et une seconde partie mobile 15, destinée à être liée en rotation au volant (non représenté) du véhicule automobile.

Les deux parties 14, 15 mobiles l'une par rapport à l'autre de la cassette 5 sont coaxiales selon le mode de réalisation décrit.

Les parties fixe 14 et mobile 15 de la cassette 5 sont mobiles l'une par rapport à l'autre à l'encontre du ou des rubans souples 7. A cet effet, le ou les rubans souples 7 sont montés dans un logement défini par les parties fixe et mobile 14, 15.

La partie fixe 14 comporte selon le mode de réalisation illustré un fond de boîtier 17 apte à accueillir le(s) ruban(s) souple(s) 7. Plus précisément, dans cet exemple le fond de boîtier 17 est creux de façon à recevoir le ou les rubans souples 7.

Selon l'exemple représenté, le fond de boîtier 17 comprend une paroi de fond 17a sensiblement circulaire et une paroi latérale 17b raccordée à la périphérie de la paroi de fond 17a.

Le fond de boîtier 17 peut comporter un axe central 19 apte à être traversé par la colonne de direction (non représentée sur les figures).

La partie fixe 14 peut en outre comporter une première denture 20 agencée ici sur la périphérie interne du fond de boîtier 17.

De plus, le fond de boîtier 17 est apte à porter un connecteur 9b complémentaire d'un connecteur 9a recevant les extrémités du ou des rubans souples 7 destiné à être relié au faisceau électrique du véhicule. Le connecteur 9b est par exemple orienté sensiblement axialement. Le ou les rubans souples 7 sont donc raccordés à la partie fixe 14.

Une paroi 18, ici fixe, au moins partiellement opaque peut être agencée entre le fond de boîtier 17 et la partie mobile 15.

Le fond de boîtier 17 et la paroi fixe 18 forment lorsqu'ils sont assemblés un boîtier partiellement fermé dans lequel se trouvent le(s) ruban(s) souple(s) 7.

En outre, selon le mode de réalisation illustré, la paroi fixe 18 présente une forme sensiblement circulaire complémentaire de la paroi de fond 17a du fond de boîtier 17.

La paroi fixe 18 peut porter un capot de connecteur 9c complémentaire du connecteur 9a recevant les extrémités du ou des rubans souples 7 et du connecteur 9b. Ce capot de connecteur 9c peut, de façon similaire au connecteur 9b, être orienté sensiblement axialement.

De plus, la paroi fixe 18 présente deux faces opposées 18a, 18b : une première face 18a du côté du fond de boîtier 17 et une deuxième face 18b opposée au fond de boîtier 17. La deuxième face 18b présente selon l'exemple illustré une surface sensiblement plane et perpendiculaire à l'axe *A* de la colonne de direction (non représentée).

Selon le mode de réalisation illustré, la paroi fixe 18 porte sur sa deuxième face 18b des pistes de connexion 21, par exemple imprimées ou surmoulées sur la paroi fixe 18. Les pistes de connexion 21 sont par exemple circulaires, et peuvent former des cercles concentriques centrés sur l'axe de rotation du rotor.

Des contacts frottants 23 complémentaires, portés par la partie mobile 15, sont agencés en vis-à-vis de la face supérieure 18b de la paroi fixe 18 portant les pistes de connexion 21. Les contacts frottants 23 se présentent selon l'exemple illustré sous forme de lames métalliques souples, c'est-à-dire ici déformables élastiquement, aptes à être reliées par une extrémité à la partie mobile 15, et dont l'autre extrémité est apte à frotter contre les pistes de connexion 21. Pour obtenir le frottement, les contacts frottants 23 sont comprimés contre les pistes de connexion 21, de sorte que l'élasticité des lames métalliques plaque l'extrémité frottante contre la piste de contact 21 qui lui est associée.

Bien entendu, d'autres modes de réalisation des contacts frottants 23 sont envisageables.

Dans le mode de réalisation représenté, les contacts frottants 23 sont reliés à des câbles courant fort 25, du côté du rotor, et les pistes de connexion 21 sont reliées à un connecteur courant fort 26. Ce connecteur courant fort 26 se présente ici sous forme d'une fiche de connexion, qui est destinée à être insérée dans une prise correspondante lors de la mise en place du contacteur tournant 1 sur le support de commutateurs 12.

La fiche de connexion du connecteur courant fort 26 est disposée sur un bras radial 27 partant de la paroi fixe 18, et est orientée sensiblement axialement.

Les câbles courant fort 25 sont reliés à des organes disposés sous le volant, par exemple l'avertisseur sonore, ou tout autre dispositif requérant une alimentation conséquente, comme un chauffage du volant.

Un montage inverse, dans lequel les contacts frottants 23 sont disposés sur la paroi fixe 18, tandis que les pistes de connexion 21 sont portées par la partie mobile 15 est également possible. De même, une combinaison des deux montages est possible.

Bien entendu la paroi 18 pourrait en variante porter un support de circuit électrique dit PCB en anglais pour « Printed Circuit Board » ou encore porter des pistes de connexion pour alimenter un tout autre dispositif que l'avertisseur sonore.

Par ailleurs, la paroi fixe 18 comporte en outre un trou 28, ici sensiblement central, pour le passage de la colonne de direction (non représentée).

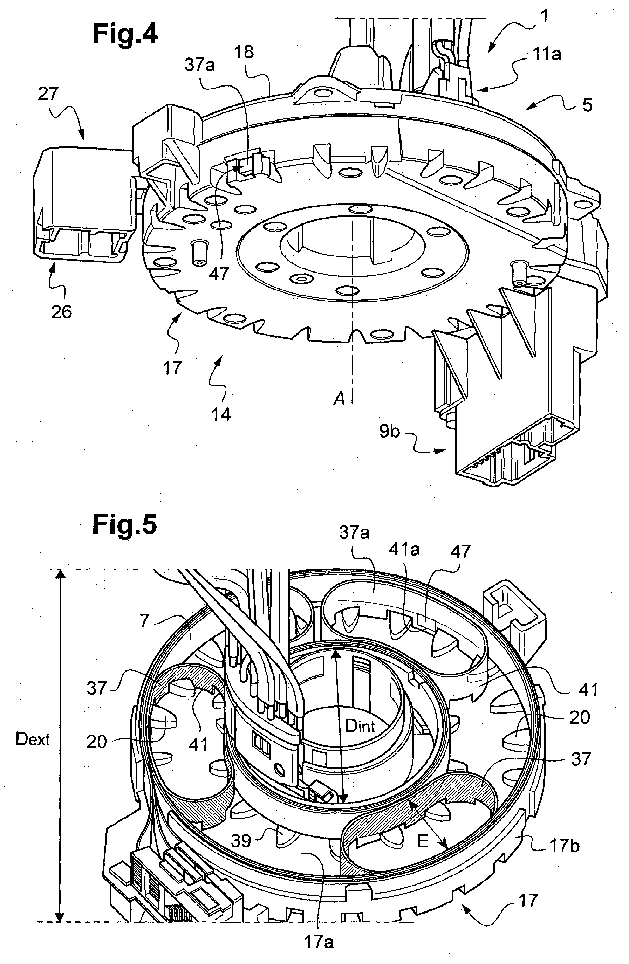

Ainsi, à l'état assemblé schématisé sur la figure 4, la partie fixe 14 de la cassette 5 comportant le fond de boîtier 17 et la paroi fixe 18 présente une forme sensiblement de palet présentant un trou central, par lequel passe la colonne de direction du véhicule.

En se référant de nouveau à la figure 1, la partie mobile 15 comporte quant à elle un couvercle tournant 29 placé sur la paroi fixe 18.

Le couvercle tournant 29 est apte à être entraîné en rotation par le volant du véhicule (non représenté).

Le couvercle tournant 29 présente une ouverture 30 apte à recevoir le connecteur 11a recevant une extrémité du ou des rubans souples 7 destiné à être relié aux dispositifs liés au volant. Le ou les rubans souples 7 sont donc raccordés à la partie mobile 15.

Le couvercle tournant 29 présente de plus un trou 31, ici central, de manière à pouvoir être traversé par la colonne de direction (non visible sur les figures).

L'axe central 19 du fond de boîtier 17, le trou central 28 de la paroi fixe 18 et le trou central 31 du couvercle tournant 29 sont concentriques selon l'exemple illustré.

Le contacteur tournant 1 comporte en outre des moyens d'enroulement et de déroulement 33 du ou des rubans souples 7.

Les moyens d'enroulement et de déroulement 33 comprennent selon l'exemple illustré un moyeu d'entraînement 35 et des chenilles 37, 37a.

Le moyeu d'entraînement 35 présente une forme sensiblement tubulaire et est placé dans la cassette 5.

Selon le mode de réalisation décrit le moyeu d'entraînement 35 est agencé autour de l'axe central 19 du fond de boîtier 17 de la cassette 15.

Les chenilles 37, 37a peuvent être obtenues au moyen d'anneaux souples par exemple de caoutchouc. Selon l'exemple illustré, les chenilles 37, 37a présentent respectivement une forme de bande fermée.

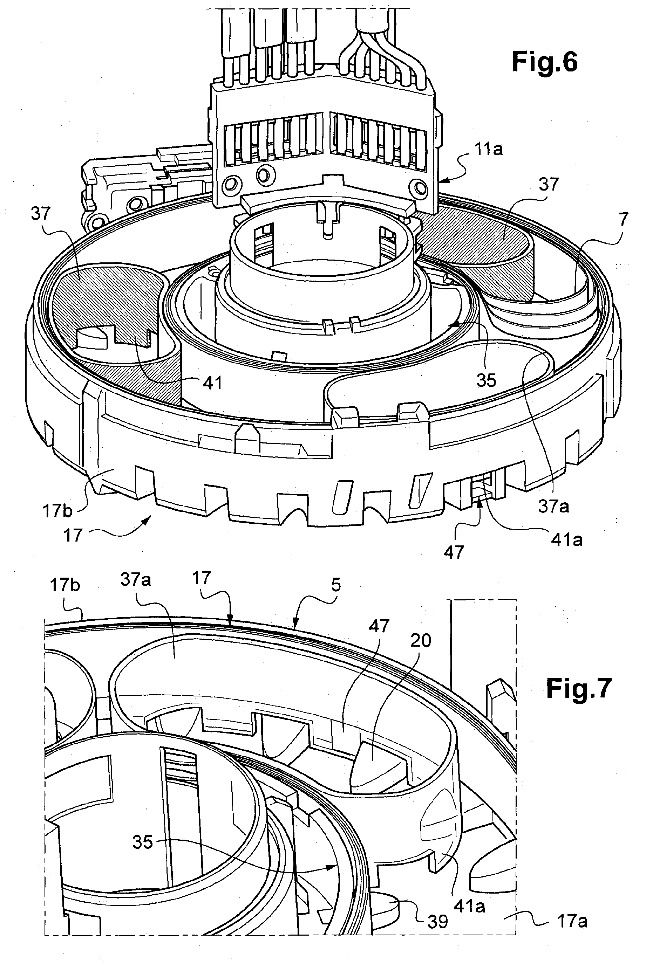

De plus, comme cela est visible sur les figures 5 et 6, à l'état assemblé du contacteur tournant 1 les chenilles 37, 37a n'entrent pas en contact les unes avec les autres.

Les rubans souples 7 sont repliés autour des chenilles 37, 37a qui forment un guide et un soutien pour les rubans souples 7 lors des enroulements-déroulements de ceux-ci quand le volant est tourné.

À cet effet, les chenilles 37, 37a sont agencées dans le fond de boîtier 17. La paroi 18 au moins partiellement opaque et fixe dans cet exemple est donc disposée entre les chenilles 37, 37a et la partie mobile 15, plus particulièrement entre les chenilles 37, 37a et le couvercle tournant 29.

Plus précisément, les chenilles 37, 37a sont agencées entre les enroulements du ou des rubans souples 7 pour maintenir le ruban souple 7 d'une part contre une face interne de la partie fixe 14 et d'autre part contre une face externe de la partie mobile 15.

Selon l'exemple illustré, à l'état assemblé du contacteur tournant 1, les chenilles 37, 37a sont aptes à plaquer le(s) ruban(s) souple(s) 7 contre la face interne de la paroi latérale 17b du fond de boîtier 17 de la partie fixe 14 et contre la face externe du moyeu d'entraînement 35 de la partie mobile 15. Le(s) ruban(s) souple(s) 7 présente(nt) alors un enroulement plaqué contre la face interne de la paroi latérale 17b du fond de boîtier 17 et un enroulement plaqué contre la face externe du moyeu d'entraînement 35.

Entre l'enroulement du ou des rubans souples 7 plaqué contre la face interne du fond de boîtier 17 et l'enroulement opposé du ou des rubans souples 7 plaqué contre la face externe du moyeu d'entraînement 35, on parle également de l'enroulement côté stator et de l'enroulement côté rotor du ou des rubans souples 7, un espace minimum E (cf figure 5) prédéterminé doit être respecté. À titre d'exemple, cet espace E peut être déterminé en fonction des performances de la matière des chenilles 37, 37a prévues pour guider l'enroulement et le déroulement du ou des rubans souples 7.

Le moyeu d'entraînement 35 est apte à être entraîné par le couvercle tournant 29 et est apte à entraîner à son tour les chenilles 37, 37a.

À cet effet, le moyeu d'entraînement 35 présente sur sa périphérie externe une seconde denture 39, et les chenilles 37, 37a présentent respectivement un nombre prédéfini de sections d'engagement 41, 41a sur les bords des chenilles 37, 37a. Les sections d'engagement 41, 41a respectives des chenilles 37, 37a sont aptes à s'engager d'une part avec les dents 20 ménagées sur la périphérie interne du fond de boîtier 17, c'est-à-dire à l'intérieur du fond de boîtier 17, et d'autre part avec les dents 39 ménagées sur la périphérie externe du moyeu d'entraînement 35, c'est-à-dire à l'extérieur du moyeu d'entraînement 35 et donc à l'extérieur de la partie mobile 15.

Les sections d'engagement 41, 41a des chenilles 37, 37a peuvent présenter une forme sensiblement en créneau.

En outre, en se référant de nouveau à la figure 1, le contacteur tournant 1 peut comporter une came de retour de clignotant 43 agencée sur la surface latérale du couvercle tournant 29.

La came de retour de clignotant 43 se présente ici sous la forme d'une excroissance radiale de la surface latérale du couvercle tournant 29. La came de retour de clignotant 43 est amenée à coopérer avec un doigt associé 45 visible sur les figures 2 et 3, pour ramener en position neutre (c'est-à-dire éteinte) les clignotants lors du mouvement de retour du volant suite à un virage dans le sens du clignotement.

La came de retour de clignotant 43 peut être implémentée dans un montage compact sans empêcher le bon fonctionnement du contacteur tournant 1.

Par ailleurs, il est important de livrer le contacteur tournant 1 dans une position neutre des deux parties fixe 14 et mobile 15 de la cassette 5 permettant d'effectuer le nombre de tours requis, à savoir au moins deux tours et demi ou au moins trois tours et demi, dans un sens et d'ans l'autre sens, sans détériorer les moyens de transmission électrique 3, une fois le contacteur tournant 1 monté sur la colonne de direction (non représentée). Il s'agit de la position dans laquelle les roues du véhicule sont droites. On parle également par la suite de position « zéro » du contacteur tournant 1.

En effet, ceci permet d'éviter qu'un dispositif lié au volant, par exemple un coussin gonflable de sécurité, soit hors service, réduisant ainsi la sécurité dans le véhicule.

Il est donc nécessaire de distinguer facilement la position du contacteur tournant avant de le bloquer dans sa position neutre pour livraison chez le constructeur.

Pour cela, une des chenilles 37, 37a est singularisée, ici la chenille 37a est singularisée, de préférence par une couleur différente par rapport aux autres chenilles 37. Dans l'exemple illustré sur les figures 1 et 5 à 8, la chenille 37a singularisée est blanche et les autres chenilles 37 sont hachurées en noir.

La chenille 37a doit aussi être singularisée par rapport aux autres éléments dans la cassette 5 et à la cassette 5, notamment par une couleur différente.

On pourrait prévoir en complément ou en alternative que la chenille singularisée 37a soit au moins partiellement transparente.

En complément, la cassette 5 comporte une fenêtre de visualisation 47 prévue sur la partie fixe 14, par exemple ici sur le fond de boîtier 17, de manière à voir la chenille singularisée 37a lorsque le contacteur tournant 1 est en position neutre et qu'il peut être tournée du nombre de tours requis dans les deux sens.

La chenille singularisée 37a est donc apte à se placer en regard de la fenêtre de visualisation 47 lorsque le contacteur tournant 1 est en position neutre.

En effet, la fenêtre de visualisation 47 et la chenille singularisée 37a sont agencées de sorte que la chenille singularisée 37a ne peut se trouver en regard de la fenêtre de visualisation 47 qu'en position neutre ou « zéro » du contacteur tournant 1.

Plus précisément, la fenêtre de visualisation 47 est pratiquée sur la paroi latérale 17b du fond de boîtier 17 de la cassette 5, plus particulièrement, entre deux dents 20 du fond de boîtier 17.

Ainsi, une section d'engagement 41a, sensiblement en créneau dans cet exemple, de la chenille singularisée 37a peut s'engager entre les deux dents 20 du fond de boîtier 17 délimitant la fenêtre de visualisation 47, lorsque le contacteur tournant 1 est en position neutre. Plus précisément, la chenille singularisée 37a étant réalisée sous forme de bande fermée dans l'exemple illustré, et il s'agit d'une section d'engagement 41a d'une portion longitudinale de la chenille singularisée 37a qui se place en regard de la fenêtre de visualisation 47 lorsque le contacteur tournant 1 est en position neutre.

Afin de déterminer l'agencement de la chenille singularisée 37a, plusieurs paramètres peuvent être pris en compte tels que notamment :
- le nombre total de tours de volant, par exemple ± 2,5 tours ou 3,5 tours autour de la position neutre ou « zéro » du contacteur tournant,
- le diamètre de la colonne de direction,
- l'espace minimum E entre l'enroulement du ou des rubans souples 7 plaqué contre la face interne du fond de boîtier 17 et l'enroulement opposé du ou des rubans souples 7 plaqué contre la face externe du moyeu d'entraînement 35, et
- le nombre de dents 39 mobiles du moyeu d'entraînement 35 et le nombre de dents 20 fixes du fond de boîtier 17, comme cela sera expliqué par la suite.

Cette liste de paramètres pour déterminer l'agencement de la chenille singularisée 37a à travers la fenêtre de visualisation 47 uniquement lorsque le contacteur tournant 1 est en position neutre n'est pas exhaustive.

Le nombre de dents du moyeu d'entraînement 35 et du fond de boîtier 17 peuvent être déterminées en fonction des diamètres Dₑₓₜ du fond de boîtier 17 et Dᵢₙₜ du moyeu d'entraînement 35 (figure 5).

Le diamètre Dᵢₙₜ du moyeu d'entraînement 35 est fonction du diamètre de la colonne de direction, généralement issu du cahier des charges du constructeur automobile. Il s'agit donc généralement d'une valeur imposée.

À partir du diamètre Dᵢₙₜ du moyeu d'entraînement 35 et de l'espace minimum E à prévoir entre l'enroulement côté stator et l'enroulement côté rotor du ou des rubans souples 7, le diamètre Dₑₓₜ du fond de boîtier 17 de la cassette 5 peut être déterminé. Le rapport du diamètre Dₑₓₜ du fond de boîtier 17 de la cassette 5 sur le diamètre Dᵢₙₜ du moyeu d'entraînement 35 doit généralement être de l'ordre de 2.

Le rapport de ces diamètres Dᵢₙₜ et Dₑₓₜ conduit à la détermination du nombre de dents 39 du moyeu d'entraînement 35 de la partie mobile 15 et du nombre de dents 20 du fond de boîtier 17 de la partie fixe 14. En particulier, le nombre de dents 20 sur le fond de boîtier 17 et le nombre de dents 39 sur la périphérie externe du moyeu d'entraînement 35 sont des nombres entiers.

Connaissant le nombre de dents 20 sur le fond de boîtier 17 de la cassette 5 et le nombre de dents 39 sur le moyeu d'entraînement 35, l'agencement de la fenêtre de visualisation 47 sur la cassette 5 et l'agencement de la chenille singularisée 37a peuvent être définis pour que la chenille singularisée 37a ne soit visible à l'endroit de la fenêtre de visualisation 47 que lorsque le contacteur tournant 1 est en position neutre ou « zéro ».

Notamment, on peut choisir l'emplacement de la fenêtre de visualisation 47 sur la cassette 5.

L'emplacement de la fenêtre de visualisation 47 peut dépendre de contraintes imposées par le constructeur automobile. L'emplacement de la fenêtre de visualisation 47 est fonction de l'environnement, en particulier cet emplacement de la fenêtre de visualisation 47 doit être choisi de manière à toujours être visible lorsque le haut de colonne est équipé d'éléments tels qu'un capteur d'angle, des connecteurs ou autres, qui peuvent masquer le contacteur tournant 1.

De plus, l'emplacement de la fenêtre de visualisation 47 doit être avantageusement choisi de manière à éviter à l'opérateur devant assembler le contacteur tournant 1 sur le support de commutateurs 12, de se contorsionner afin de voir à travers la fenêtre de visualisation 47.

Plus précisément, la fenêtre de visualisation 47 est pratiquée sur la paroi latérale 17b du fond de boîtier 17 de la cassette 5.

Plus particulièrement, l'emplacement de la fenêtre de visualisation 47 est choisi selon l'exemple illustré entre deux dents 20 du fond de boîtier 17.

Enfin, les chenilles 37, 37a plaquant le(s) ruban(s) souple(s) 7 contre la face interne de la paroi latérale 17b du fond de boîtier 17, le(s) ruban(s) souple(s) 7 se retrouve(nt) interposé(s) entre les chenilles 37, 37a et la paroi latérale 17b du fond de boîtier 17. La fenêtre de visualisation 47 doit donc être agencée sur une portion de la paroi latérale 17b du fond de boîtier 17 exempte de ruban souple 7, de sorte qu'il n'y ait pas de ruban souple 7 interposé entre la fenêtre de visualisation 47 et la chenille singularisée 37a.

En particulier, selon le mode de réalisation illustré la fenêtre de visualisation 47 est agencée sur la paroi latérale 17b sous le(s) ruban(s) souple(s) 7 en référence à l'orientation des figures 6 et 7, à proximité de la paroi de fond 17a.

L'emplacement de la fenêtre de visualisation 47 étant défini, l'agencement de la chenille singularisée 37a peut être déterminé de sorte que la chenille singularisée 37a ne soit visible à l'endroit de la fenêtre de visualisation 47 que lorsque le contacteur tournant 1 est en position neutre ou « zéro ».

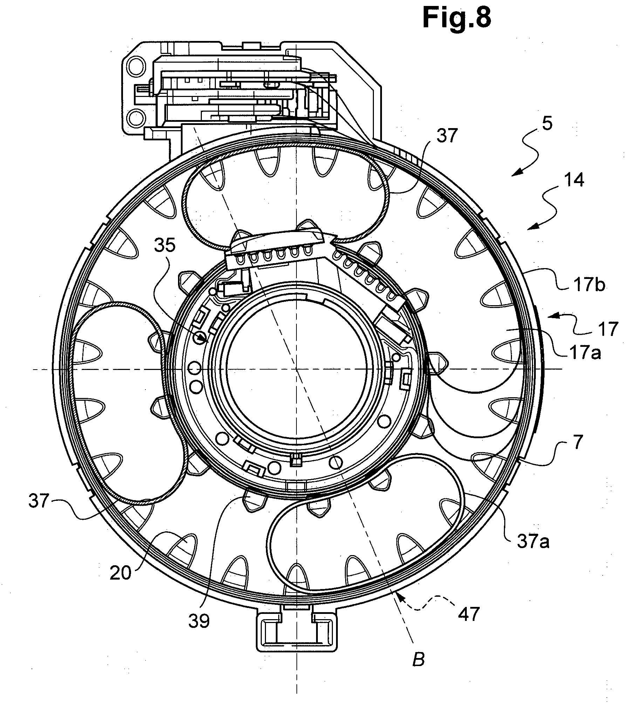

Un exemple purement illustratif et non limitatif est schématisé sur la figure 8.

Sur cette figure 8, par rapport aux contraintes imposées par le constructeur automobile, telles que le nombre de tours volants, le diamètre de la colonne de direction (non représentée), et éventuellement l'emplacement souhaité pour la fenêtre de visualisation 47, et en fonction des connaissances de l'homme du métier pour déterminer l'espace minimum E requis entre l'enroulement plaqué côté rotor et l'enroulement plaqué côté stator du ou des rubans souples 7, le nombre de dents 39, 20 entier et naturel d'une part pour le moyeu d'entraînement 35 et d'autre part pour le fond de boîtier 17 peut être déterminé, et la chenille singularisée 37a doit alors être placée suivant un axe de positionnement *B* de façon à être visible à travers la fenêtre de visualisation 47 lorsque le contacteur tournant 1 est en position neutre.

La chenille singularisée 37a peut en outre être agencée de manière à être centrée sur cet axe de positionnement *B*.

Dans un cas très particulier représenté sur cette figure 8, au moins une dent 20 du fond de boîtier qui reste fixe et au moins une dent 39 du moyeu d'entraînement 35 qui est donc mobile, se retrouvent alignées selon cet axe de positionnement *B* en position neutre du contacteur tournant 1.

Par ailleurs, une ouverture 49, visible sur la figure 2, correspondante à la fenêtre de visualisation 47, est pratiquée dans le support de commutateurs 12 de sorte que la fenêtre de visualisation 47 et donc la chenille singularisée 37a soit visible à travers cette ouverture 49 correspondante. L'ouverture 49 dans le support de commutateurs 12 se trouve agencée sensiblement en regard de la fenêtre de visualisation 47 lorsque le contacteur tournant 1 est monté dans le support de commutateurs 12.

On comprend donc que la chenille singularisée 37a et la fenêtre de visualisation 47 prévue sur la cassette 5 permettent une visualisation rapide de la position du contacteur tournant 1. En effet lorsque cette chenille singularisée 37a est visible à travers la fenêtre de visualisation 47 le contacteur tournant 1 est en position « zéro » et peut être monté autour de la colonne de direction.

En outre, l'opérateur peut contrôler facilement et sans se contorsionner la position du contacteur tournant 1 et tourner si besoin le contacteur tournant 1 pour le placer en position neutre.

De plus, cette solution ne nécessite pas de marquer le ou les rubans souples pour détecter la position du contacteur tournant 1.

Il n'est pas non plus nécessaire de marquer des repères sur un couvercle transparent disposé au-dessus de la partie mobile pour détecter la position du contacteur tournant.

La solution proposée par l'invention est donc plus simple à réaliser et moins coûteuse que certaines solutions de l'art antérieur.

Enfin, un tel contacteur tournant 1 présente un encombrement réduit et un assemblage compact permettant de comprendre notamment une came de retour de clignotants 43 et une paroi 18 support de pistes de connexion 21 pour alimenter en courant fort un dispositif lié au volant tel que l'avertisseur sonore ou un chauffage du volant dont les pistes courant fort sont séparées des lignes de courant faible.

## Revendications

1. Contacteur tournant (1) pour colonne de direction de véhicule automobile, comprenant :
- au moins un ruban souple (7) de liaison électrique pour l'alimentation de dispositifs liés au volant dudit véhicule,
- des moyens d'enroulement / de déroulement (33) du ruban souple (7) comportant une pluralité de chenilles (37, 37a) pour guider l'enroulement et le déroulement du ruban souple (7), et
- une cassette (5) apte à être montée sur la colonne de direction et comportant :
• une partie fixe (14), et
• une partie mobile (15) par rapport à la partie fixe (14) apte à être liée en rotation au volant du véhicule, et définissant avec la partie fixe (14) un logement pour le ruban souple (7) et les chenilles (37, 37a), contacteur dans lequel
- la partie fixe (14) de la cassette (5) présente une fenêtre de visualisation (47), et
- une des chenilles (37a) est singularisée et présente au moins une portion destinée à être agencée sensiblement en regard de la fenêtre de visualisation (47) de la cassette (5) lorsque le contacteur tournant (1) est en position neutre, la position neutre étant une position à partir de laquelle le contacteur tournant (1) peut être tourné dans un sens et dans l'autre selon un nombre de tours prédéfini.

2. Contacteur tournant (1) selon la revendication 1, dans lequel la partie fixe (14) comporte un fond de boîtier (17) apte à recevoir le ruban souple (7) et les chenilles (37, 37a) et dans lequel la fenêtre de visualisation (47) est agencée sur une portion du fond de boîtier (17) exempte de ruban souple (7).

3. Contacteur tournant (1) selon la revendication 2, dans lequel le fond de boîtier (17) présente une paroi de fond (17a) et une paroi latérale (17b) raccordée à la paroi de fond (17a), et dans lequel la fenêtre de visualisation (47) est agencée sur la paroi latérale (17b) du fond de boîtier (17).

4. Contacteur tournant (1) selon l'une quelconque des revendications précédentes, dans lequel la chenille singularisée (37a) est de couleur différente par rapport aux autres chenilles (37) et aux éléments de la cassette (5).

5. Contacteur tournant selon l'une quelconque des revendications précédentes, dans lequel les chenilles (37, 37a) présentent respectivement des sections d'engagement (41, 41a) avec une première denture (20) ménagée à l'intérieur de la partie fixe (14) et avec une seconde denture (39) ménagée à l'extérieur de la partie mobile (15) pour maintenir le ruban souple (7) d'une part contre une face interne de la partie fixe (14) et d'autre part contre une face externe de la partie mobile (15).

6. Contacteur tournant (1) selon la revendication 5, dans lequel la fenêtre de visualisation (47) est agencée entre deux dents (20) de la partie fixe (14).

7. Contacteur tournant (1) selon l'une quelconque des revendications précédentes, dans lequel la partie fixe (14) comprend une paroi (18) au moins partiellement opaque disposée entre les chenilles (37, 37a) et la partie mobile (15).

8. Contacteur tournant selon la revendication 2 prise en combinaison avec la revendication 7, dans lequel la partie mobile (15) de la cassette (5) comporte un couvercle tournant (29) disposé sur la paroi (18) du côté opposé au fond de boîtier (17).

9. Contacteur tournant selon la revendication 8, dans lequel le couvercle tournant (29) comporte une came de retour de clignotant (43) agencée sur la surface latérale du couvercle tournant (29).

10. Contacteur tournant selon l'une quelconque des revendications 7 à 9, comportant au moins une paire de pistes de connexion (21) courant fort et au moins une paire de contacts frottants (23) associés à la paire de pistes de connexion (21) courant fort et destinés à coopérer avec lesdites pistes de connexion (21), et dans lequel la paire de pistes de connexion (21) courant fort et la paire de contacts frottants (23) sont portés d'une part par la paroi au moins partiellement opaque (18) et d'autre part par la partie mobile (15) en vis-à-vis de la paroi au moins partiellement opaque (18).

## Patentansprüche

1. Drehkontaktgeber (1) für eine Kraftfahrzeuglenksäule, umfassend:
- mindestens ein flexibles elektrisches Verbindungsband (7) zur Versorgung von mit dem Lenkrad des Fahrzeugs verbundenen Vorrichtungen,
- Mittel (33) zum Aufrollen/Abrollen des flexiblen Bands (7), die eine Vielzahl von Raupen (37, 37a) zum Führen das Aufrollen und das Abrollen des flexiblen Bands (7) umfassen, und
- eine Kassette (5), die zur Montage an der Lenksäule geeignet ist und Folgendes umfasst:
• einen ortsfesten Teil (14) und
• einen bezüglich des ortsfesten Teils (14) beweglichen Teil (15), der geeignet ist, mit dem Lenkrad des Fahrzeugs drehverbunden zu sein, und mit dem ortsfesten Teil (14) eine Aufnahme für das flexible Band (7) und die Raupen (37, 37a) definiert,
wobei bei dem Kontaktgeber
- der ortsfeste Teil (14) der Kassette (5) ein Sichtfenster (47) aufweist und
- eine der Raupen (37a) individualisiert ist und mindestens einen Abschnitt aufweist, der dazu bestimmt ist, im Wesentlichen gegenüber dem Sichtfenster (47) der Kassette (5) angeordnet zu sein, wenn der Drehkontaktgeber (1) in der neutralen Position ist, wobei die neutrale Position eine Position ist, von der aus der Drehkontaktgeber (1) gemäß einer vordefinierten Anzahl von Umdrehungen in der einen und der anderen Richtung gedreht werden kann.

2. Drehkontaktgeber (1) nach Anspruch 1, wobei der ortsfeste Teil (14) einen Gehäuseboden (17) aufweist, der zur Aufnahme des flexiblen Bands (7) und der Raupen (37, 37a) geeignet ist und in dem das Sichtfenster (47) an einem Abschnitt des Gehäusebodens (17) ohne flexibles Band (7) angeordnet ist.

3. Drehkontaktgeber (1) nach Anspruch 2, wobei der Gehäuseboden (17) eine Bodenwand (17a) und eine mit der Bodenwand (17a) verbundene Seitenwand (17b) aufweist und wobei das Sichtfenster (47) an der Seitenwand (17b) des Gehäusebodens (17) angeordnet ist.

4. Drehkontaktgeber (1) nach einem der vorhergehenden Ansprüche, wobei die individualisierte Raupe (37a) gegenüber den anderen Raupen (37) und den Elementen der Kassette (5) eine andere Farbe hat.

5. Drehkontaktgeber nach einem der vorhergehenden Ansprüche, wobei die Raupen (37, 37a) jeweils Sektionen (41, 41a) zum Eingriff mit einer innen am ortsfesten Teil (14) ausgeführten ersten Zahnung (20) und mit einer außen am beweglichen Teil (15) ausgeführten Zahnung (39) aufweisen, um das flexible Band (7) einerseits gegen eine innere Fläche des ortsfesten Teils (14) und andererseits gegen eine äußere Fläche des beweglichen Teils (15) zu halten.

6. Drehkontaktgeber (1) nach Anspruch 5, wobei das Sichtfenster (47) zwischen zwei Zähnen (20) des ortsfesten Teils (14) angeordnet ist.

7. Drehkontaktgeber (1) nach einem der vorhergehenden Ansprüche, wobei der ortsfeste Teil (14) eine mindestens teilweise opake Wand (18) umfasst, die zwischen den Raupen (37, 37a) und dem beweglichen Teil (15) angeordnet ist.

8. Drehkontaktgeber nach Anspruch 2 in Kombination mit Anspruch 7 genommen, wobei der bewegliche Teil (15) der Kassette (5) einen Drehdeckel (29) aufweist, der an der Wand (18) auf der dem Gehäuseboden (17) gegenüberliegenden Seite angeordnet ist.

9. Drehkontaktgeber nach Anspruch 8, wobei der Drehdeckel (29) ein Blinker-Rückführkurvenglied (43) aufweist, das an der Seitenfläche des Drehdeckels (29) angeordnet ist.

10. Drehkontaktgeber nach einem der Ansprüche 7 bis 9, der mindestens ein Paar Starkstrom-Anschlussbahnen (21) und mindestens ein Paar Reibkontakte (23) aufweist, die dem Paar Starkstrom-Anschlussbahnen (21) zugeordnet und dazu bestimmt sind, mit den Anschlussbahnen (21) zusammenzuwirken, und wobei das Paar Starkstrom-Anschlussbahnen (21) und das Paar Reibkontakte (23) einerseits von der mindestens teilweise opaken Wand (18) und andererseits vom beweglichen Teil (15) gegenüber der mindestens teilweise opaken Wand (18) getragen werden.

## Claims

1. Rotating contactor (1) for a motor vehicle steering column, comprising:
- at least one flexible electrical connecting tape (7) for powering devices connected to the steering wheel of said vehicle,
- means (33) for winding / unwinding the flexible tape (7) comprising a plurality of tracks (37, 37a) for guiding the winding and unwinding of the flexible tape (7), and
- a cassette (5) that can be mounted on the steering column and comprising:
• a stationary part (14), and
• a part (15) moving relative to the stationary part (14) that can be rotatably connected to the steering wheel of the vehicle, and defining, with the stationary part (14), a housing for the flexible tape (7) and the tracks (37, 37a),
in which contactor
- the stationary part (14) of the cassette (5) has a viewing window (47), and
- one of the tracks (37a) is differentiated and has at least one portion designed to be arranged substantially across from the viewing window (47) of the cassette (5) when the rotating contactor (1) is in the neutral position, the neutral position being a position from which the rotating contactor (1) can be turned in one direction and in the other according to a predefined number of turns.

2. Rotating contactor (1) according to Claim 1, in which the stationary part (14) incorporates a casing back (17) that can accommodate the flexible tape (7) and the tracks (37, 37a), and in which the viewing window (47) is arranged on one portion of the casing back (17) exempt of flexible tape (7).

3. Rotating contactor (1) according to Claim 2, in which the casing back (17) has a back wall (17a) and a lateral wall (17b) connected to the back wall (17a), and in which the viewing window (47) is arranged on the lateral wall (17b) of the casing back (17).

4. Rotating contactor (1) according to any one of the preceding claims, in which the differentiated track (37a) is of a different color compared with the other tracks (37) and with the components of the cassette (5).

5. Rotating contactor (1) according to any one of the preceding claims, in which the tracks (37, 37a) respectively have sections of engagement (41, 41a) with a first toothing (20) provided inside the stationary part (14) and with a second toothing (39) provided outside the moving part (15) in order to hold the flexible tape (7) on one hand against an inner face of the stationary part (14) and on the other against an outer face of the moving part (15).

6. Rotating contactor (1) according to Claim 5, in which the viewing window (47) is arranged between two teeth (20) of the stationary part (14).

7. Rotating contactor (1) according to any one of the preceding claims, in which the stationary part (14) includes a wall (18) at least partially opaque placed between the tracks (37, 37a) and the moving part (15).

8. Rotating contactor according to Claim 2 taken in combination with Claim 7, in which the moving part (15) of the cassette (5) incorporates a rotating cover (29) placed on the wall (18) of the side opposite the casing back (17).

9. Rotating contactor according to Claim 8, in which the rotating cover (29) incorporates an indicator return cam (43) arranged on the lateral surface of the rotating cover (29).

10. Rotating contactor (1) according to any one of Claims 7 to 9, incorporating at least one pair of high voltage current connecting strips (21) and at least one pair of sliding contacts (23), associated with the pair of high voltage current connecting strips (21), and designed to cooperate with said connecting strips (21), and in which the pair of high voltage current connecting strips (21) and the pair of sliding contacts (23) are supported on one hand by the at least partially opaque wall (18) and on the other by the moving part (15) opposite the at least partially opaque wall (18).
